# EUROPEAN PATENT APPLICATION

(11) **EP 2 672 189 A1**
(43) Date of publication of application: **11.12.2013**
(21) Application number: 13170784.6
(22) Date of filing: 06.06.2013
(51) Int. Cl.: F24F 1/00, F24F 13/20, F24D 3/14, F24D 19/06, F24D 19/02

(54) **Convection terminal for climate control systems, mainly for recessed floor-mounted installations**

(30) Priority: 08.06.2012 IT PD20120187
(71) Applicant: Martini, Pierantonio, 35132 Padova (IT)
(72) Inventor: Martini, Pierantonio, 35132 Padova (IT)
(74) Representative: Modiano, Micaela Nadia

(57) **Abstract**

A convection terminal for climate control systems, mainly for recessed floor-mounted installations, comprising, inside a box-like containment body (11) which is closed at the top by a protective grille (14), at least one of a heat exchange unit (12) and a ventilation unit (13), the at least one of the heat exchange unit (12) and the ventilation unit (13) being mounted on a support (15) which can be extracted manually from the inside of the box-like body (11); the manually extractable support (15) is constituted by a supporting framework (16), which can be moved to open and close by means of at least one articulated quadrilateral (17) or pantograph mechanism.

## Description

The present invention relates to a convection terminal for climate control systems, mainly for recessed floor-mounted installations.

Currently known terminals for climate control systems, such as floor-mounted convectors or fan coils, comprise, within a containment framework, at least one of a heat exchange unit and a ventilation unit.

The framework is closed in an upper region by a protective grille, often of the walkable type, since these terminals are to be flush-mounted, generally but not exclusively in a raised floor or in any case so as to rest on the ground.

These terminals are typically installed at the base of, and proximate to, windows, French doors, and glazed surfaces in general, in order to warm, during the winter period, the cold air that is present in the vicinity of these glazed surfaces, furthermore ensuring the drying of condensation; the motion of the air produced by these terminals is based on the principle of natural or forced convection.

Moreover, these terminals, which are generally part of a climate control system, in the summer period cool the warm air that stagnates near the glazed surfaces, furthermore providing a high refrigeration yield that is sufficient to cool the internal spaces.

Terminals of the known type, despite being appreciated and widespread, have a main drawback linked to the arrangement of the components inside the containment framework.

The heat exchange unit and the ventilation unit, if any, are in fact generally fixed stably (one or both) to the framework and can be removed from it only by means of adapted tools suitable to release these components from the fixing elements by means of which they are anchored to the framework that contains them.

The drawback is linked to the need to remove from the inside of the terminal, and therefore from the bottom of the containment framework, the dirt and dust that accumulate therein, since the warm air, in rising from the terminal, by natural convection and even more so by forced convection, reintroduces into circulation the deposited dust, with the risk of severe discomfort to people who are allergic to dust and with the likelihood of dirtying the nearby glazed surface and the environment in general.

Therefore, terminals of the known type are cleaned by lifting the grille and aspirating the dust wherever possible and in whatever possible way between the available and accessible gaps between the heat exchange unit and the ventilation unit and between these components and the bottom of the framework.

Terminals are known which comprise one or more bracket systems that are pivoted to the framework for recessed floor-mounting, for supporting the ventilation unit and for a heat exchange unit.

Such a terminal allows rotating the bracket systems like a door, freeing a certain space for access to the bottom of the terminal where the dirt has accumulated.

Although this solution with hinged opening and lifting is appreciated, it does not allow rotation of the units beyond a certain angle, due to the interference between the covering panel, supported by the bracket systems, and the surrounding flooring, unless an adapted gap is left in the flooring at the axis of rotation of said bracket systems.

The aim of the present invention is to provide a terminal for climate control systems, mainly for recessed floor-mounted installations, that is capable of obviating the drawbacks associated with terminals of the known type.

Within this aim, an object of the present invention is to provide a terminal for climate control systems the inside of which is easily accessible for easier cleaning than in known types.

Another object of the present invention is to provide a terminal that is simple to install even in known and operating climate control systems.

Another object of the present invention is to provide a terminal that is capable of an efficiency, a performance and a functionality that are not inferior to those of terminals of the known type.

Another object of the present invention is to provide a terminal that is simple to handle even for a user who does not have particular prior teachings.

Another object of the present invention is to provide a terminal for climate control systems, mainly for recessed floor-mounted installations, that can be manufactured with known systems and technologies.

This aim and these and other objects, which will become more apparent hereinafter, are achieved by a convection terminal for climate control systems, mainly for recessed floor-mounted installations, comprising, inside a box-like containment body which is closed at the top by a protective grille, at least one of a heat exchange unit and a ventilation unit, said at least one of the heat exchange unit and the ventilation unit being mounted on a support which can be extracted manually from the inside of the framework, said terminal being **characterized in that** said manually extractable support is constituted by a supporting framework, which can be moved to open and close by means of at least one articulated quadrilateral or pantograph mechanism.

Further characteristics and advantages of the invention will become more apparent from the description of a preferred but not exclusive embodiment thereof, illustrated by way of non-limiting example in the accompanying drawings, wherein:
Figure 1 is a perspective view of a terminal according to the invention;
Figure 2 is a perspective view of a part of a terminal according to the invention;
Figure 3 is a sectional side view of the terminal according to the invention;
Figure 4 is a schematic view of a constructive variation of a detail of a terminal according to the invention.

With reference to the figures, a terminal for climate control systems according to the invention is generally designated by the reference numeral 10.

The terminal 10 comprises, within a boxlike containment body 11, at least one of a heat exchange unit 12 and a ventilation unit 13.

In the embodiment described herein by way of non-limiting example of the invention, the terminal comprises both a heat exchange unit 12 and a ventilation unit 13.

The boxlike body 11 is closed at the top by a protective grille 14, which is generally but not exclusively of the walkable type.

The heat exchange unit 12 and the ventilation unit 13 are mounted on a support 15 that can be extracted manually from the inside of the boxlike body 11.

The manually extractable support 15 is constituted by a supporting framework 16, which can be moved to open and close by means of two opposite symmetrical articulated quadrilateral mechanisms 17 and 18.

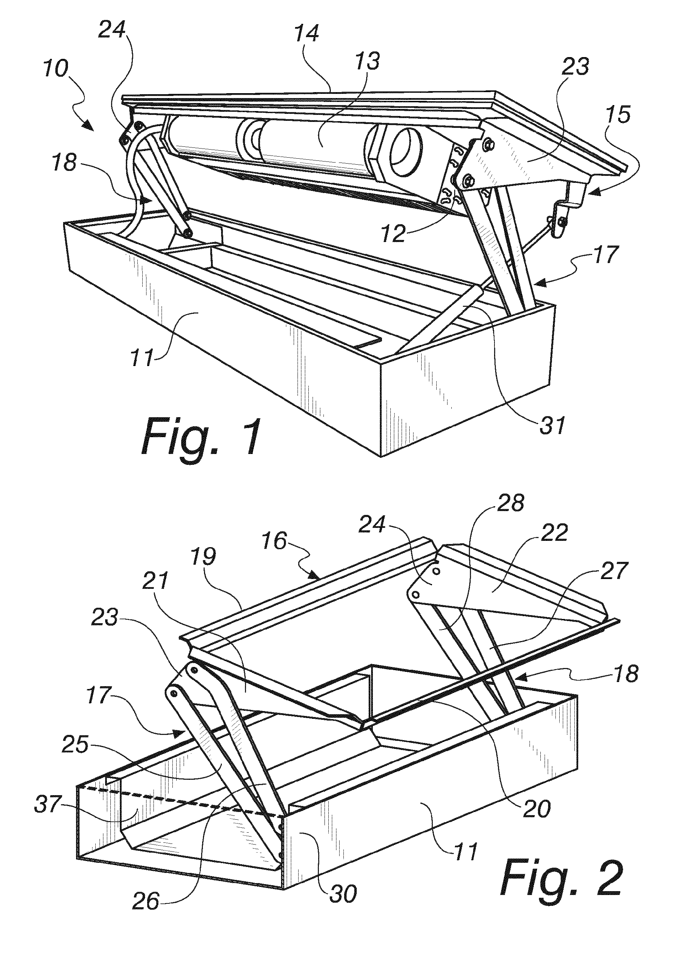

The substantially frame-like supporting framework 16, which is clearly visible in Figure 2, comprises two longitudinal bars 19 and 20, a front one and a rear one, and two opposite symmetrical lateral portions 21 and 22, each provided with a resting shoulder for the grille 14.

The lateral portions 21 and 22 are each constituted by a substantially triangular bracket, the front part of which, 23 and 24 respectively, defines the linkage element of the corresponding articulated quadrilateral 17 or 18, the rocker elements 25 and 26 of which for the mechanism 17 and 27 and 28 for the mechanism 18 are pivoted to said boxlike body 11 at the rear wall 30.

These symmetrical articulated quadrilaterals 17 and 18 determine a guided lifting and lowering motion of said supporting framework 16.

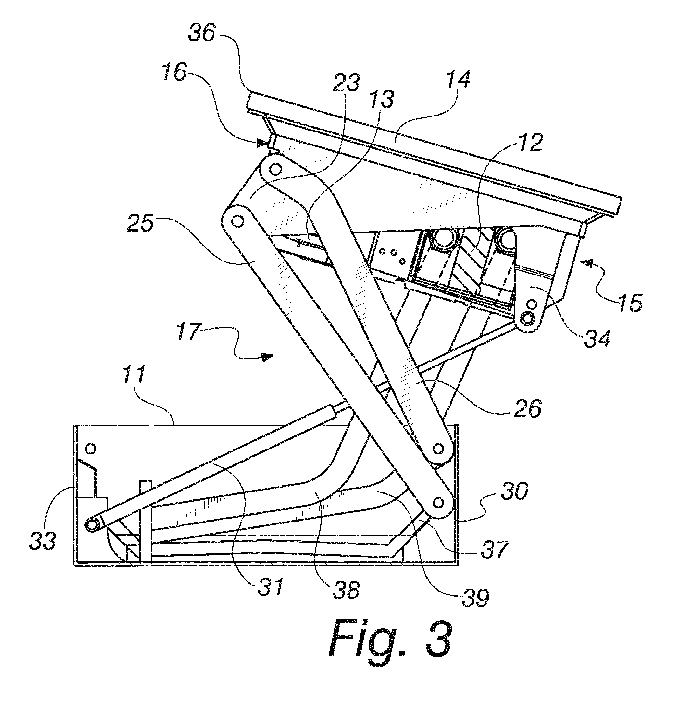

As clearly shown in Figures 1 and 3, the heat exchange unit 12 and the ventilation unit 13 are supported by the front and rear bars of the supporting framework 16.

The stability of the open or closed position assumed by the articulated quadrilateral mechanisms 17 and 18 is ensured by the presence of at least one gas-assisted strut 31.

In particular, a gas-assisted strut 31 is arranged so as to operate by being pivoted at one end to the front wall 33 of the boxlike body 11 and at the opposite end to a tab 34 which protrudes downward from the supporting framework 16.

The articulated quadrilaterals 17 and 18 are provided with rocker elements 25, 26, 27 and 28 which are constituted by flat bars that have different lengths within the same articulated quadrilateral mechanism 17 and 18.

The different lengths of the rocker elements allow a translational and rotary motion that ensures that it is possible to lift the supporting framework 16 from the closed position, with the grille 14 parallel to the surrounding floor, to an open configuration in which the grille is inclined by a few degrees with respect to the plane of the floor.

In this manner, particular maneuvering spaces formed in the floor around the terminal are not required.

In the closed configuration, the gas-assisted strut 31 applies a force that pushes the supporting framework 16 and all the components coupled thereto downward, thus ensuring that all the parts of the terminal 10 remain lowered.

When one decides to lift the supporting framework 16, a force is applied at the front edge 16 of the supporting framework 16 until the neutral point of the gas-assisted strut 31, in which the spring 31 exerts a force in a direction that is parallel to the floor and is neutral with respect to the lowering or lifting action of the supporting framework 16, is passed.

Once the neutral point has been passed, the gas-assisted strut 31 applies a force that lifts the supporting framework 16 and all the components that are fixed thereto.

When the gas-assisted strut 31 reaches the stroke limit, the supporting framework 16 is in such a position as to allow easy inspection of the bottom of the boxlike containment body 11 and of the condensation collecting tray 37.

The grille 14, the heat exchange unit 12 and the ventilation unit 13 are therefore stable even without the use of a support and without the constant manual intervention of the operator.

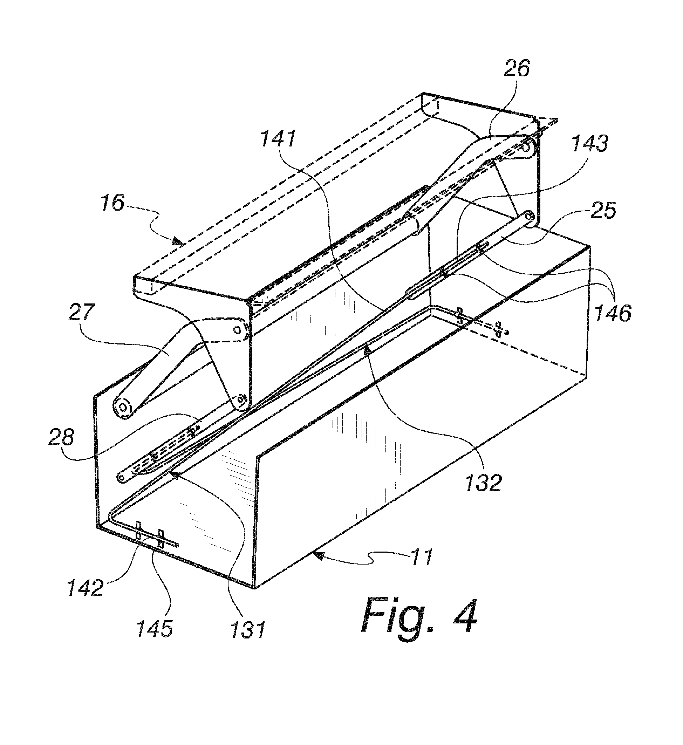

Figure 4 illustrates schematically a constructive variation of the invention, in which the lifting of the supporting framework 16 is facilitated by a pair of symmetrical elastic torsion bars 131 and 132.

Each torsion bar, for example 131, has a central portion 141 that extends along the entire width of the boxlike body 11, and two lateral arms 142 and 143, a first one, for example 142, being fixed to one side of the boxlike body 11, and the second one 143, offset by a certain angle from the first one 142, i.e., by the aperture angle that is preset for the supporting framework 16, being fixed to one of the opposite rocker elements, for example 25.

The fixing of the lateral arms 142 and 143 can be achieved for example by means of metallic omega-shaped brackets 145 and 146.

The use of torsion bars 141 and 142 requires that in order to keep the supporting framework lowered in the closed configuration, a device for locking it in this configuration is used, said device being understood to be of a known type, for example with snap engagement and release opening button.

The heat exchange unit 12 can be constituted selectively either by a battery of tubular elements in which heat transfer fluid, such as water or refrigerating fluid, flows, or by an electric resistance heating element.

In the embodiment presented here, the heat exchange unit 12 is formed by a battery of tubular element in a pack of fins, said heat exchange unit 12 being of a type known per se.

The ventilation unit 13 is generally formed by one or more fans of the tangential type.

Figure 3 shows the flexible hoses 38 and 39 of the tubular elements with the climate control system.

In a constructive variation of the invention, not shown for the sake of simplicity, the terminal has, instead of the articulated quadrilateral mechanisms 17 and 18, two equivalent pantograph mechanisms.

In practice it has been found that the invention thus described solves the problems noted in terminals for climate control systems for recessed floor-mounting of the known type and the like.

In particular, the present invention provides a terminal for convection systems, mainly for recessed floor-mounted installations, the interior of which can be accessed easily for easier cleaning than in known types.

Moreover, the present invention provides a terminal that is simple to install even on already known and operating climate control systems.

Furthermore, the present invention provides a terminal whose efficiency, performance and functionality are not inferior to those of terminals of the known type.

Moreover, the present invention has devised a terminal that is simple and safe to handle even for a user who has not received particular prior teaching.

Another object of the present invention is to provide a terminal for convection systems, mainly for recessed floor-mounted installations, that can be manufactured economically with known systems and technologies.

In practice, the materials used, as long as they are compatible with the specific use, as well as the dimensions, may be any according to requirements and to the state of the art.

The disclosures in Italian Patent Application No. PD2012A000187 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A convection terminal for climate control systems, mainly for recessed floor-mounted installations, comprising, inside a box-like containment body (11) which is closed at the top by a protective grille (14), at least one of a heat exchange unit (12) and a ventilation unit (13), said at least one of the heat exchange unit (12) and the ventilation unit (13) being mounted on a support (15) which can be extracted manually from the inside of the box-like body (11), said terminal being **characterized in that** said manually extractable support (15) is constituted by a supporting framework (16), which can be moved to open and close by means of at least one articulated quadrilateral (17) or pantograph mechanism.

2. The convection terminal according to claim 1, **characterized in that** it comprises two (17, 18) of said at least one articulated quadrilateral mechanism, which are opposite and symmetrical.

3. The terminal according to claim 1, **characterized in that** said substantially frame-like supporting framework (16) comprises two longitudinal bars (19, 20), a front one and a rear one, and two opposite symmetrical lateral portions (21, 22), each provided with a resting shoulder for the grille (14).

4. The terminal according to one or more of the preceding claims, **characterized in that** said lateral portions (21, 22) are each constituted by a substantially triangular bracket, the front part (23, 24) of which defines the linkage element of the corresponding articulated quadrilateral (17, 18), the rocker elements (25, 26, 27, 28) of which are pivoted to said box-like body (11) at the rear wall (30).

5. The terminal according to one or more of the preceding claims, **characterized in that** the stability of the open or closed position assumed by the articulated quadrilateral mechanisms (17, 18) is ensured by the presence of at least one gas-assisted strut (31).

6. The terminal according to one or more of the preceding claims, **characterized in that** said gas-assisted strut (31) is arranged so as to operate by being pivoted at one end to the front wall (33) of the box-like body (11) and at the opposite end to a tab (34) which protrudes downward from the supporting framework (16).

7. The terminal according to one or more of the preceding claims, **characterized in that** said articulated quadrilateral mechanisms (17, 18) are provided with rocker elements (25, 26, 27, 28) constituted by flat bars which have different lengths inside the same articulated quadrilateral mechanism (17, 18).
